# EUROPEAN PATENT APPLICATION

(11) **EP 4 220 523 A1**
(43) Date of publication of application: **02.08.2023**
(21) Application number: 22175995.4
(22) Date of filing: 30.05.2022
(51) Int. Cl.: G06Q 30/02

(54) **USER DATA LIFECYCLE MANAGEMENT**

(30) Priority: 31.01.2022 US 202217589706
(71) Applicant: Intuit Inc., Mountain View, CA 94043 (US)
(72) Inventor: SANTHARAM, Sangeetha Uthamalingam, Moutain View, California, 94043 (US); MUKHERJEE, Saikat, Mountain View, California, 94043 (US); VATTIKONDA, Narender, Mountain View, California, 94043 (US); KUMAR, Sameer, Mountain View, California, 94043 (US); GUDIMELLA, Vijay Sriharsha, Mountain View, California, 94043 (US); SETZER, Steve, Mountain View, California, 94043 (US)
(74) Representative: D Young & Co LLP

(57) **Abstract**

Certain aspects of the present disclosure provide techniques for managing the lifecycle of user data. A user data lifecycle management system can collect user data from multiple sources including the user, the organization implementing the lifecycle management system, and third parties. The user data is used to create a user profile with a global user identifier. The user profile is scored based on the attributes within the user profile. The user data lifecycle management system can route the user profile to a destination source based on the score of the user profile. The destination source can be a tool of the organization for interacting with the user. The destination sources can also provide feedback to that is incorporated to the user profile and can assist the user data lifecycle management system in managing the user profile and aid in decision making.

## Description

### INTRODUCTION

Aspects of the present disclosure relate to a user data lifecycle management system for providing a unified view of user data between disparate data sources as well as enhancing user experience.

### BACKGROUND

In order to run effectively, organizations collect data of users (including actual and potential customers, employees, etc.) of their services and/or products. The data can range from name and contact information of the user to how many and/or what types of products the user has bought as well as feedback from the user regarding the services offered by the organization (e.g., services offered for sale, customer support, etc.). The data collected by organization is used not only to keep track of users, but also is used to affect the user experience. For example, an organization can keep track of user data for sales and marketing, such as to sell a product to a user or advertise a new service to a user.

However, there exists a challenge to the effective use of such data when it is isolated within different organizational systems that do not have effective ways for sharing the data. For example, user data utilized by a marketing element of an organization is isolated from user data utilized by a sales element of the organization. Due to the user data being separately utilized and maintained by different data sources of the organization, there is a lack of unified data, resulting in inconsistent and improper utilization of the user data. Additionally, due to the lack of unified user data, an organization is not able to have a proper or full understanding of the user data and in turn, the user, which can lead to underdeveloped relationships with users.

For example, if a sales element receives feedback that the user is not interested in a product or service and does not share it with a marketing element, then the marketing element may waste resources by marketing the product or service to the same user that already indicated they are not interested in the product or service. This sort of scenario wastes organizational resources and results in bad user outcomes.

Therefore, a solution is needed that can overcome the shortcomings of conventional user data management system.

### SUMMARY

Particular embodiments are set out in the independent claims. Various optional examples are set out in the dependent claims. Certain embodiments provide a method, for example, to manage user data via a user data management system. The method includes receiving, based on an event, user data from a user data source. The method further includes creating a global user identifier for the user data. The method further includes appending the global user identifier to the user data. The method further includes creating a user profile that includes the user data. The method further includes storing the user profile in a user data platform. The method further includes transmitting a call to one or more application programming interfaces for enrichment data from one or more enhancement data sources. The method further includes receiving engagement data from the one or more enhancement data sources. The method further includes updating the user profile with the engagement data and the enrichment data from external sources via application programming interfaces. The method further includes scoring the user profile based on a first set of rules. The method further includes routing the user profile to a destination source based on application of a second set of rules and the user profile score.

Certain embodiments provide a method, for example, to manage user data via a user data management system. The method includes receiving, based on an event, user data at a user data platform from a user data source. The method further includes creating a global user identifier for the user data. The method further includes creating a user profile that includes the user data and the global user identifier. The method further includes transmitting a call to one or more application programming interfaces for enrichment data from one or more enhancement data sources. The method further includes receiving engagement data from the one or more enhancement data sources. The method further includes updating the user profile with the engagement data and the enrichment data from external sources via application programming interfaces. The method further includes scoring the user profile based on a first set of rules. The method further includes routing the user profile to a destination source based on application of a second set of rules and the user profile score. The method further includes receiving feedback data from the destination source. The method further includes updating the user profile with the feedback data based on the global user identifier.

Other embodiments provide systems to perform aforementioned methods associated with managing user data. Additionally, other embodiments provide computer-readable mediums comprising instructions for performing the aforementioned methods.

The following description and the related drawings set forth in detail certain illustrative features of one or more embodiments.

### DESCRIPTION OF THE DRAWINGS

The appended figures depict certain aspects of the one or more embodiments and are therefore not to be considered limiting of the scope of this disclosure.
**FIG. 1** depicts an example user data management system, according to an embodiment.
**FIG. 2** depicts an example user data platform, according to an embodiment.
**FIG. 3** depicts an example method of managing user data via the user data management system, according to an embodiment.
**FIG. 4** depicts an example processing system configured to perform the methods described herein, according to an embodiment.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for managing lifecycle user data via a user data lifecycle management system (or a user data management system).

In order to manage user data, an organization can implement a user data management system to collect, maintain, and develop user data through its lifecycle. The user data lifecycle begins when an event is triggered by the user interacting with the organization in some manner (e.g., telephone, e-mail, in-person). The event triggering the initial collection of user data can be referred to as a lead. In some cases, the user data (or lead) is received based on a user event or interaction with a data source of the user data lifecycle management system. For example, if a user calls the organization, the corresponding data source can identify the phone number of the user as the user data. Other examples of events from which the user data lifecycle management system can collect user data is when the user accesses the organizations website and fills out a web form, sends an email to the organization, etc. In some cases, the user data collected by the user data management system in such instances includes name and contact information of the user. With the initial user data collected, the user data lifecycle management system enhances the user data as the user data progresses through its lifecycle (e.g., as the user data lifecycle management system manages and routes the user data). For example, the user data lifecycle management system can identify and update the state of the user such as whether the user is qualified or disqualified for downstream system interaction. In some cases, organizations can label different user states according to their own terms.

For example, once the user data is collected, the user data platform can generate a global user identifier for the user data and generate a user profile (or lead profile), which the user data management system can update and further develop with enhancement data from data sources both internal to the organization and third parties. For example, the user data management system can retrieve any existing user data previously collected by the organization as well as user data collected by third parties to include in the user profile. By doing so, the user data management system is able to more fully develop the user profile as well as better assist the user. The user data (or lead) is further developed by the user data platform enhancing the user profile with enhancement data (e.g., enrichment data and/or engagement data) related to the user.

The user data management system not only develops the user profiles, but also scores the user profile based on a first set of rules in order to determine whether there is sufficient information about the user for the organization to engage with the user via one or more destination sources. A destination source can be a tool implemented by the organization that also utilizes the user data. For example, the organization can determine if there is enough information about the user for the organizations sales or marketing and with a second set of rules the user data management system routes the user profile to a destination source accordingly.

After the user profile is routed to a destination source, the destination source can utilize the user profile accordingly. Additionally, the destination source can collect feedback data from users which the destination source, in turn, can provide to the user data management source to update the user profile. With the updated user profile, the user data management system can manage the user profiles accordingly.

### Example User Data Management System

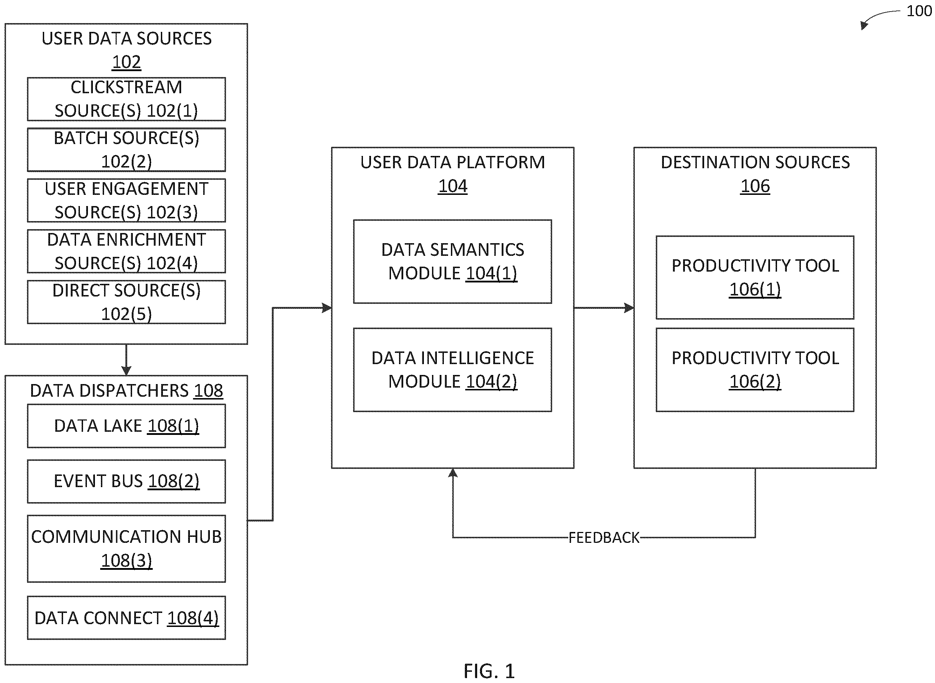

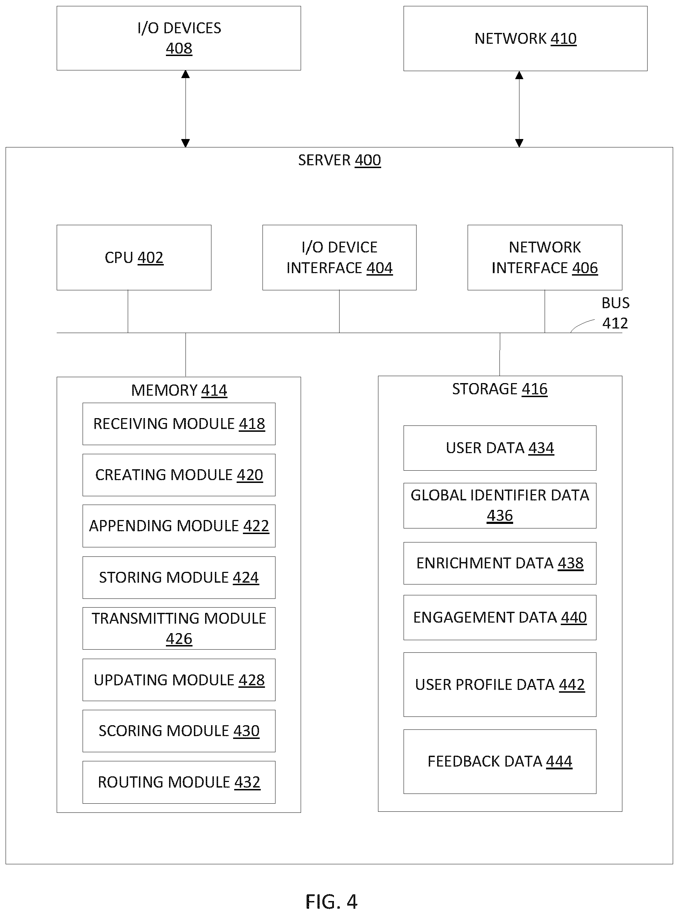

**FIG. 1** depicts an example user data management system 100. As illustrated, the example user data management system 100 includes user data sources 102, user data platform 104, and destination sources 106. The user data management system 100 can include a server for managing the user data from the user data sources 102, user data platform 104, and destination source 106. The server can be a physical server or a virtual (e.g., cloud) server, as further described in **FIG. 4****.**

The user data sources 102 can include various internal and external data sources such as clickstream source(s) 102(1), batch source(s) 102(2), user engagement source(s) 102(3), data enrichment source(s) 102(4), and direct source(s) 102(5).

The user data from clickstream source(s) 102(1) can include clickstream events from users of products (e.g., software program products) or services (e.g., website services) offered by an organization implementing the user data management system. The clickstream events can be collected from web forms, simplified user interfaces (SUIs), and In Product Discoveries (IPDs).

The batch source(s) 102(2) can include third party data sources that provide to the user data management system list data (e.g., list uploads) including account data, which can include contact and/or intent data corresponding to the user. In some cases, data from the batch source(s) 102(2) can include a data lake, which can be a data storage repository capable of holding a large amount of raw data in a native format.

The user data management system 100 also manages enhancement data, which includes engagement data from engagement source(s) 102(3) and enrichment data from enrichment data sources 102(4). The enrichment data is from third party enrichment data source(s) 102(4) that are retrieved by the user data platform 104 via APIs based on user data such as contact information in the enrichment data. The enrichment data can include contact and/or account data of the user stored by the third party. The engagement data is from internal sources of the organization that is implementing the user data management system 100. For example, if the organization previously interacted with the user via one or more data tools (e.g., a sales tool, marketing tool, etc.), then any data collected in such interactions would be saved in the engagement source(s) 102(3) and utilized by the user data platform 104 to enhance the user data.

The direct source(s) 102(5) can include data channels in which the user is directly interacting with the user data management system 100. For example, the user can interact with the organization implementing the user data management system 100 via a phone call, video call, or chat options. By directly interacting with the user data management system 100, any data collected is from the direct source 104(5) (e.g., the user).

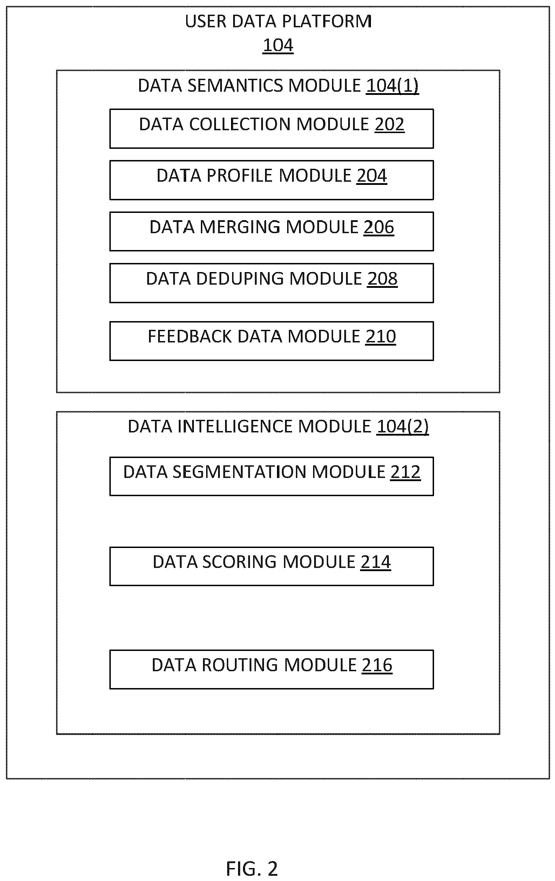

The user data sources 102 can stream the user data to the user data platform 104. In some cases, the user data sources 102 can also provide the user data to the user data repository 104 in periodic batches. The user data platform 104 includes data semantics module 104(1) and data intelligence module 104(2). The data semantics module 104(1) includes data collection, data model and profiling, data merging and deduplication, and feedback data, as further described in **FIG. 2**. The user data platform 104 can generate a unified view of the user data (or lead data) so that the user data can be managed efficiently between the user data sources 102 and destination sources 106 by the user data platform 104.

In order for the user data sources 102 to provide the user data to the user data platform 104, either through streaming or batch processing, a data dispatcher 108 can be utilized. For example, a data dispatcher 108 can include a data lake 108(1), an event bus 108(2), a communication hub 108(3) and a data connect 108(4). The data lake 108(1) of the data dispatchers 108 can receive data from third parties like batch sources 102(2). The data lake 108(1) can store the data received and provide the data to a communications hub 108(3), an event bus 108(2), and a data connect 108(4) to transmit the data to the user data platform to generate and/or update a user profile. The event hub 108(2) provides distributed asynchronous architecture patterns so that the user data sources 102 can be decoupled. This in turn can allow user data to be streamed. The communications hub 108(3), in some cases, is a system that can collect engagement data and create an engagement data profile for a user. The engagement data profile can include scores related to one or more user preferences regarding receiving communications. The data connection 108(4) can transmit the data to the user data platform 104.

The data semantics module 104(1) collects user data from the data sources 102, generates a global identifier and/or user profile, appends the user data with enhancement data, and manages the feedback data received from destination sources 106. The data intelligence module 104(2) includes data segmentation, scoring, and routing, as further described in **FIG. 2**. The data intelligence module 104(2) includes segmenting user profiles, generating scores for the user profiles based on a first set of rules, and routing the user profiles based on a second set of rules.

The destination sources 106 include productivity tools of the organization. The productivity tools can be used by the organization to communicate with users. For example, productivity tool 106(1) can include a marketing data tool (e.g., Eloqua) and productivity tool 106(2) can include a sales data tool (e.g., Salesforce). The destination sources 106 interact with the users via the productivity tools 106(1) and 106(2) like the marketing data tool or the sales data tool, respectively. In some cases, agents associated with the sales data tool can interact with users purchasing product(s) and/or service(s) of the organization. In other cases, an automated marketing data tool can send advertisements via email to users of product(s) and/or service(s).

In addition to providing destination sources 106 with user data, the user data platform 104 also receives feedback from users via the destination sources 106. For example, if the user did not like a marketing email or made purchases through the destination sources 106, that information can be sent back to the user data platform 104 to update the user profile utilized by the data semantics module 104(1) and the data intelligence module 104(2). The feedback data that is sent to the user data platform 104 from the destination sources 106 also can include user state changes, score changes, etc.

In some cases, the destination sources 106 can provide user data input. For example, user data such as phone or chat data can be received initially from the destination sources 106 to establish a user profile.

### Example User Data Platform

**FIG. 2** depicts an example user data platform 104 comprising a data semantics module 104(1) and data intelligence module 104(2). The data semantics module 104(1) includes all of the modules that compute and provide rich user data. The data intelligence module 104(3) includes different processing and decisioning modules that can move the rich user profile to other downstream systems. Additionally, the user data platform 104 can receive feedback and user data from downstream systems that can be incorporated by the user data platform 104 to provide the latest user data, for example, the user state, for lifecycle data management.

The data semantics module 104(1) includes a data collection module 202, a data profile module 204, a data merging module 206, a data deduping module 208, and a feedback data module.

The data collection module 202 receives data from the user data sources 102 as described in **FIG. 1**. In some cases, the user data is received based on an occurrence of an event (e.g., a user interaction with the user data management system of an organization). The user data can include user contact information. In other cases, the user data is received based on a call transmitted to an API of an enrichment data source, which is a third-party data source that includes user contact and/or account data.

The data profile module 204 generates the user profile. In some cases, once the user data is received by the user data platform 104, the global identifier is generated. The global identifier is appended to the user data to create a user profile. The global identifier of the user data (or lead) is a unique identifier that is used by the user data management system to identify the user profile through the lifecycle management of the user profile (e.g., when routing the user profile to a productivity tool like a sales and/or marketing tool). In some cases, the global identifier is a randomly generated value.

The data merging module 206 merges the user data retrieved from enhancement data sources such as the enrichment data source and engagement data source described in **FIG. 1**. For example, when the user profile has been previously generated and the user data received is matched to the user data. In one example, matching the previously generated user profile and received user data may be based on a set of user attributes such as a user's email address or other identifying information that can be used to perform such matching.

In some cases, multiple users can be associated with a single company. For example, a company can have a single account with the company but multiple users (or agents) can interact with the organization via the destination productivity tools of the user data lifecycle management system. In such cases, the different users can be identified as being part of the same company but the contact information for the destination source tools can be identified individually for each. For example the contact information can be included in an event bus. In the example of multiple users from the same organization, each user will have their own user (or lead) profile, which can be sent to a destination productivity tool (e.g., a sales data tool or a marketing data tool).

The data deduping module 208 removes duplicate user data from user profiles. In some cases, when the user data platform 104 receives the user data from user data sources, the data deduping module 208 determines the user data is the same and removes the duplicate user data.

The feedback data module 210 receives feedback data from the destination productivity tools. The user profile is updated with the feedback data. In some cases, the feedback data can be utilized by the feedback data module 210 of the user data platform 104 to update a user status attribute in the user profile. For example, the user status or user state refers to a phase in the lifecycle the user is associated with. In some cases, the user status or state can include that the user is qualified for destination source (e.g., marketing tool qualified, sales qualified, etc.) or that the user is not qualified for a destination source (e.g., marketing tool disqualified, sales disqualified. In other cases, the feedback data module 210 can determine the following from the user feedback: (1) user state changes in the user lifecycle (e.g., if the user is qualified, the user state changes), (2) data changes determined by a human expert (e.g., including data provided by the user during an interaction), (3) human expert assigned to user (or lead), and (4) score updates of the user.

In some cases, the user state can assist in determining which productivity tool can interact with the user. The user states can indicate if the user is ready, qualified, disqualified, or converted for interacting with a productivity tool. For example, the user state can be "Marketing Ready", "Marketing Qualified", "Sales Ready", "Sales Accepted", "Sales Qualified", "Sales Converted", "Marketing Disqualified", "Sales Disqualified", "Sales Unconverted", and "Customer."

The feedback data module 210 can also provide the user feedback data to the data intelligence module 104(2). In such cases, the feedback can be included in the first set of rules for scoring the user profile or the second set of rules for determine whether and/or how to route the user profile to the destination data source. For example, if the feedback data is such that the user does not want to receive any marketing information regarding a product and/or service, then the rule can be triggered in the first set of rules and/or the second set of rules so that the marketing data tool does not receive the user profile (but depending on the rules, the sales data tool can still receive the user profile).

The data intelligence module 104(2) includes a data segmentation module 212, a data scoring module 214, and a data routing module 216.

The data segmentation module 212 generates rules for segmenting user profiles into groups based on similar attributes. For example, the data segmentation module 212 can identify a user attribute (e.g., a geographic attribute that a user is a resident of California) and determine a group of user profiles that share the same geographic attribute. In doing so, the user data platform can efficiently route user profiles. For example, if an organization is implementing a marketing campaign to users in California, the data segmentation module 212 can identify the group of user profiles.

The data scoring module 214 generates a score for each user profile. The score is generated based on a set of rules and the data attributes within the user profile. In some cases, the score can be generated by a machine learning model. For example, the machine learning model can apply a set of rules to each user profile. In particular, the trained model applies rules to the user attributes of the user profile to determine the priority of each user attribute. Once each attribute is scored by the model, an overall score for the user profile is generated. The overall score becomes a data attribute in the user profile that can be used by the data routing module 216 to direct the user profile accordingly.

The data routing module 216 routes the user profile to the respective destination productivity tool. In order to route the user profile, the data routing module 216 implements a second set of rules to the attributes to determine which destination data source to route the user profile. The data routing module 216 can route the user profile (and corresponding user to a destination data source such as marketing tool (e.g., Eloqua) or sales tool (e.g., Salesforce).

In some cases, as the user profile is managed by the user data platform, the state of the user profile is determined and updated. For example, the different user states (or lead states) that are identified related to the user profile indicate whether the user profile is ready to be sent to a data tool such as a marketing tool (e.g., Eloqua) or a sales tool (e.g., Salesforce) that the user data platform is connected to and communicates with. In such cases, the user state can be "Sale Ready Lead" for user profiles ready to be sent to a sales tool. Further, the user state can be "Marketing Ready Lead" for user profiles ready to be sent to a marketing tool. In some cases, user data can be received by the user data platform from a sales tool. In such instances, the user data (or lead data) can include the user state (or lead state) "Sales Accepted Lead", indicating the user data is acceptable to the sales tool for further utilization and allowing the destination productivity tools to take an optimal course of action for user communication.

In addition to feedback being received from users by the user data platform, the user data platform also can receive information regarding state changes from a sales tool. For example, if the sales tool is able to convert a user (or lead) to a sales opportunity, then the user state can be updated to "Sales Qualified Lead". If the sales tool is able to close a sales opportunity (e.g., make a sale), then the user state can be updated to "Sales Converted Lead". If the sales tool is able to determine the user is no longer interested in a product or service, then the sales tool can determine the user is a "Sales Disqualified Lead" or a "Sales Unconverted Lead". The user state in such cases is received by the user data platform and appended to the user profile in order for the user data platform to manage the user profile accordingly (e.g., via the data routing module 216).

### Example Method of Routing a User

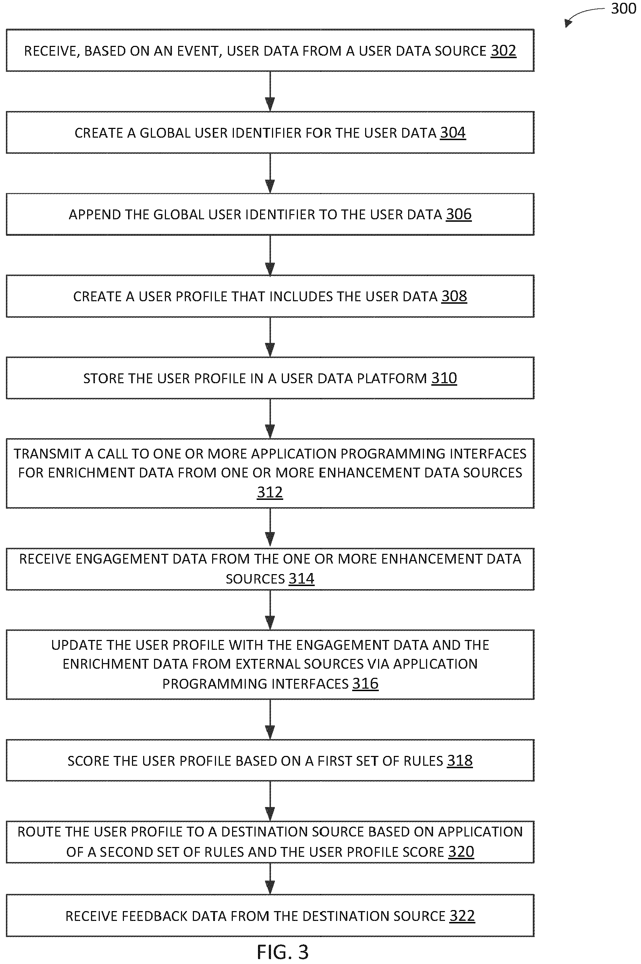

**FIG. 3** depicts an example method 300 of routing a user via a user data lifecycle management system, such as depicted and described with respect to **FIGs. 1** and **2**.

At 302, the user data lifecycle management system receives, based on an event, user data from a user data source.

At 304, the user data lifecycle management system creates a global user identifier for the user data. The global user identifier is a unique identifier. In some cases, the global user identifier is a randomized value, including alphanumeric values.

At 306, the user data lifecycle management system appends the global user identifier to the user data.

At 308, the user data lifecycle management system creates a user profile that includes the user data. For example, once the global user identifier is determined, the collected user data is stored in the user profile. The user data collected is merged with the user data in the user profile and any duplicate data is removed by the user data platform.

At 310, the user data lifecycle management system stores the user profile in a user data platform. In some embodiments, the user data platform includes data semantic and intelligence modules, as described in **FIG. 2**.

At 312, the user data lifecycle management system transmits a call to one or more application programming interfaces for enrichment data from one or more enhancement data sources. For example, the user data lifecycle management system can initiate API calls to third parties for additional user data that has been collected by third parties, including contact information and/or account information that can be utilized by the user data management system. For example, if the user data lifecycle management system initially received a phone number as contact information, then the user data lifecycle management system can retrieve enrichment data via API calls to third parties to enhance the user profile.

At 314, the user data lifecycle management system receives engagement data from the one or more enhancement data sources. In some cases, the organization implementing the user data lifecycle management system can also include additional data sources that collect user data. For example, the organization implementing the user data management system can include data tools for collecting data from users and such data can be retrieved by the user data management system to enhance the user profile.

At 316, the user data lifecycle management system updates the user profile with the engagement data and the enrichment data from external sources via application programming interfaces.

At 318, the user data lifecycle management system scores the user profile based on a first set of rules. The score of a user profile can be determined based on a set of rules that are applied to the user profile.

Based on the user attributes within the user profile a score is determined. For example, if the user attribute in a user profile indicates that a user has a high priority user attribute (e.g., if the user initiated contact with the organization, the user is located in a certain geographic region, etc.) then the user attribute is given a higher priority percentage in comparison to a user profile determined to be a lower priority. Once the priority percentages are determined for each attribute, a score is determined for the user profile itself by adding the values of the priority percentages.

At 320, the user data lifecycle management system routes the user profile to a destination source (e.g., a productivity tool like a marketing data tool or a sales data tool) based on application of a second set of rules and the user profile score. The user data lifecycle management system routes the user profile to the destination source via a streaming process in order to provide the most recent user data to the destination source.

In some cases, if the user profile has a score that meets or exceeds a threshold value, then the user profile can be routed to a destination source tool (e.g., a marketing tool or an advertising tool of the organization) to utilize. For example, if a user initiated contact to the organization, shared information (e.g., email address or phone), and interacted with the organization (e.g., downloaded a document from a system of the organization), then these data attributes can contribute to the user's score based on values determined for each attribute. If the sum of the values of the user attributes meets or exceeds a threshold value, for example, 70, then the user can be routed to a destination productivity tool. In some cases, the threshold value can be a value greater than or less than 70, which is simply illustrative of an example threshold value.

In other instances, if the user profile has a score that does not meet the threshold value, then the user profile is blocked from being routed to a destination source. In such cases, the user data lifecycle management system can attempt to retrieve additional data regarding the user in order to meet the threshold value.

Upon the user profile being routed to the destination source, the destination source can process the user profile accordingly. For example, if the destination source is a marketing tool of the organization, the user profile can be used to determine contact information to send marketing material to the user (e.g., via email).

At 322, the user data lifecycle management system can also receive feedback from user(s) via the destination source. The feedback from the user can be structured (e.g., thumbs-up, thumbs-down, like, dislike, etc.) or unstructured (e.g., user comments). The feedback data can be provided from the destination source to the user data platform. The feedback data is merged to the user profile accordingly, to update the user profile. For example, if the user feedback includes a comment that the user is not interested in a marketed product, then such information is added to the user profile and the profile is not provided to the marketing tool in the future.

In order to merge the user feedback data to the corresponding user profile, the global identifier corresponding to the user profile is used to update the user profile with the respective user feedback.

In some cases, the user can interact with the organization and the data management system implemented in more than one way. For example, the user can initiate a video chat and a separate phone call. In such instances, to prevent duplicate user profiles being created, a user attribute is determined to match to an existing user profile (e.g., the user profile created on the first instance and/or event of user contact). Once the user attribute is determined to match a user attribute in an existing user profile (e.g., contact information such as email address, phone number, etc.), then the user data corresponding to the second event is merged to the existing user profile.

The user data lifecycle management system provides an architecture system in which user data of an organization no longer remains isolated or siloed. The implementation of the user data lifecycle allows for a unified view of user data that assists the organization in enhancing the user experience as well as eliminates redundancy and wasted resources. For example, multiple user profiles for the same user are eliminated by the user data lifecycle management system. Further, the data tools of the user data lifecycle management system can synchronize actions. Additionally, the data tools of the user data lifecycle management utilize feedback data collectively. For example, the feedback loop can provide the latest information related the user status or user state. In some cases, the data tools can determine which users to target, for example in an advertising campaign, or which users to not contact, for example regarding sales.

### Example Server

**FIG. 4** depicts an example server 400 of the user data lifecycle management system that may perform the methods described herein, for example, with respect to **FIG. 1****,** **3**. For example, the server 400 can be a physical server or a virtual server (e.g., cloud) server and is not limited to a single server that performs the methods described herein.

Server 400 includes a central processing unit (CPU) 402 connected to a data bus 412. CPU 402 is configured to process computer-executable instructions, e.g., stored in memory 414 or storage 416, and to cause the server 400 to perform methods described herein, for example, with respect to **FIG. 3**. CPU 402 is included to be representative of a single CPU, multiple CPUs, a single CPU having multiple processing cores, and other forms of processing architecture capable of executing computer-executable instructions.

Server 400 further includes input/output (I/O) device(s) 408 and interfaces 404, which allows server 400 to interface with input/output devices 408, such as, for example, keyboards, displays, mouse devices, pen input, and other devices that allow for interaction with server 400. Note that server 400 may connect with external I/O devices through physical and wireless connections (e.g., an external display device).

Server 400 further includes a network interface 406, which provides server 400 with access to external network 410 and thereby external computing devices.

Server 400 further includes memory 414, which in this example includes a receiving module 418, a creating module 420, an appending module 422, a storing module 424, a transmitting module 426, an updating module 428, a scoring module 430, and a routing module 432 for performing operations and methods described herein.

Note that while shown as a single memory 414 in **FIG. 4** for simplicity, the various aspects stored in memory 414 may be stored in different physical memories, but all accessible by CPU 402 via internal data connections such as bus 412.

Storage 416 further includes user data 434, which can include user data received from user data sources as described in **FIG. 1****.**

Storage 416 further includes global identifier data 436, which can include global identifiers as described in **FIG. 1****.**

Storage 416 further includes enrichment data 438 as described in **FIGs. 1-3**.

Storage 416 further includes engagement data 440 as described in **FIGs. 1-3**.

Storage 416 further includes user profile data 442 as described in **FIGs. 1-3**.

Storage 416 further includes feedback data 444 as described in **FIGs. 1-3**.

While not depicted in **FIG. 4**, other aspects may be included in storage 416.

As with memory 414, a single storage 416 is depicted in **FIG. 4** for simplicity, but various aspects stored in storage 416 may be stored in different physical storages, but all accessible to CPU 402 via internal data connections, such as bus 412, or external connections, such as network interfaces 404. One of skill in the art will appreciate that one or more elements of server 400 may be located remotely and accessed via a network 406.

Thus, from one perspective, there have now been described techniques for managing the lifecycle of user data. A user data lifecycle management system can collect user data from multiple sources including the user, the organization implementing the lifecycle management system, and third parties. The user data is used to create a user profile with a global user identifier. The user profile is scored based on the attributes within the user profile. The user data lifecycle management system can route the user profile to a destination source based on the score of the user profile. The destination source can be a tool of the organization for interacting with the user. The destination sources can also provide feedback to that is incorporated to the user profile and can assist the user data lifecycle management system in managing the user profile and aid in decision making.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more. No claim element is to be construed under the provisions of 35 U.S.C. §112(f) unless the element is expressly recited using the phrase "means for" or, in the case of a method claim, the element is recited using the phrase "step for." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

Further examples of feature combinations taught by the present disclosure are set out in the following numbered clauses:
1. A method, comprising:
   receiving, based on an event, user data from a user data source;
   creating a global user identifier for the user data;
   appending the global user identifier to the user data;
   creating a user profile that includes the user data;
   storing the user profile in a user data platform;
   transmitting a call to one or more application programming interfaces for enrichment data from one or more enhancement data sources;
   receiving engagement data from the one or more enhancement data sources;
   updating the user profile with the engagement data and the enrichment data from external sources via application programming interfaces;
   scoring the user profile based on a first set of rules; and
   routing the user profile to a destination source based on application of a second set of rules and the user profile score.
2. The method of clause 1, further comprising:
   receiving feedback data from the destination source; and
   updating the user profile with the feedback data based on the global user identifier.
3. The method of clause 2, wherein the updating the user profile with the feedback data includes merging the feedback data to the user profile, based on the global user identifier.
4. The method of any preceding clause, further comprising:
   receiving, based on a second event, second user data;
   determining a data attribute of the second user data exists in the user profile; and
   merging the second user data with the existing user profile.
5. The method of any preceding clause, further comprising blocking the user profile from the destination source based on a score of the user profile failing to meet a threshold.
6. The method of any preceding clause, wherein each set of rules are based on user data attributes.
7. The method of any preceding clause, wherein the storing the user profile in the user data platform includes receiving the user data via a streaming data process at the user data platform the user profile.
8. The method of any preceding clause, wherein the storing the user profile in the user data platform includes receiving the user data via a batch data process at the user data platform the user profile.
9. The method of any preceding clause, wherein the routing the user profile by streaming to the destination source.
10. A system, comprising:
   a processor; and
   a memory storing instructions, which when executed by the processor cause the system to:
      receive, based on an event, user data from a user data source;
      create a global user identifier for the user data;
      append the global user identifier to the user data;
      create a user profile that includes the user data;
      store the user profile in a user data platform;
      transmit a call to one or more application programming interfaces for enrichment data from one or more enhancement data sources;
      receive engagement data from the one or more enhancement data sources;
      update the user profile with the engagement data and the enrichment data from external sources via application programming interfaces;
      score the user profile based on a first set of rules; and
      route the user profile to a destination source based on application of a second set of rules and the user profile score.
11. The system of clause 10, further comprising:
   receiving feedback data from the destination source; and
   updating the user profile with the feedback data based on the global user identifier.
12. The system of clause 11, wherein the updating the user profile with the feedback data includes merging the feedback data to the user profile, based on the global user identifier.
13. The system of any of clauses 10 to 12, further comprising:
   receiving, based on a second event, second user data;
   determining a data attribute of the second user data exists in the user profile; and
   merging the second user data with the existing user profile.
14. The system of any of clauses 10 to 13, further comprising blocking the user profile from the destination source based on a score of the user profile failing to meet a threshold.
15. The system of any of clauses 10 to 14, wherein the set of rules are based on user data attributes.
16. The system of any of clauses 10 to 15, wherein the storing the user profile in the user data platform includes receiving the user data via a streaming data process at the user data platform the user profile.
17. The system of any of clauses 10 to 16, wherein the storing the user profile in the user data platform includes receiving the user data via a batch data process at the user data platform the user profile.
18. The system of any of clauses 10 to 17, wherein the routing the user profile by streaming to the destination source.
19. A method, comprising:
   receiving, based on an event, user data at a user data platform from a user data source;
   creating a global user identifier for the user data;
   creating a user profile that includes the user data and the global user identifier;
   transmitting a call to one or more application programming interfaces for enrichment data from one or more enhancement data sources;
   receiving engagement data from the one or more enhancement data sources;
   updating the user profile with the engagement data and the enrichment data from external sources via application programming interfaces;
   scoring the user profile based on a first set of rules;
   routing the user profile to a destination source based on application of a second set of rules and the user profile score;
   receiving feedback data from the destination source; and
   updating the user profile with the feedback data based on the global user identifier.
20. The method of clause 19, wherein the method further comprises removing duplicate user data from the user profile.

## Claims

1. A method, comprising:
receiving, based on an event, user data from a user data source;
creating a global user identifier for the user data;
appending the global user identifier to the user data;
creating a user profile that includes the user data;
storing the user profile in a user data platform;
transmitting a call to one or more application programming interfaces for enrichment data from one or more enhancement data sources;
receiving engagement data from the one or more enhancement data sources;
updating the user profile with the engagement data and the enrichment data from external sources via application programming interfaces;
scoring the user profile based on a first set of rules; and
routing the user profile to a destination source based on application of a second set of rules and the user profile score.

2. The method of Claim 1, further comprising:
receiving feedback data from the destination source; and
updating the user profile with the feedback data based on the global user identifier.

3. The method of Claim 2, wherein the updating the user profile with the feedback data includes merging the feedback data to the user profile, based on the global user identifier.

4. The method of any preceding Claim, further comprising:
receiving, based on a second event, second user data;
determining a data attribute of the second user data exists in the user profile; and
merging the second user data with the existing user profile.

5. The method of any preceding Claim, further comprising blocking the user profile from the destination source based on a score of the user profile failing to meet a threshold.

6. The method of any preceding Claim, wherein each set of rules are based on user data attributes.

7. The method of any preceding Claim, wherein the storing the user profile in the user data platform includes receiving the user data via a streaming data process at the user data platform the user profile.

8. The method of any preceding Claim, wherein the storing the user profile in the user data platform includes receiving the user data via a batch data process at the user data platform the user profile.

9. The method of any preceding Claim, wherein the routing the user profile by streaming to the destination source.

10. A system, comprising:
a processor; and
a memory storing instructions, which when executed by the processor cause the system to:
receive, based on an event, user data from a user data source;
create a global user identifier for the user data;
append the global user identifier to the user data;
create a user profile that includes the user data;
store the user profile in a user data platform;
transmit a call to one or more application programming interfaces for enrichment data from one or more enhancement data sources;
receive engagement data from the one or more enhancement data sources;
update the user profile with the engagement data and the enrichment data from external sources via application programming interfaces;
score the user profile based on a first set of rules; and
route the user profile to a destination source based on application of a second set of rules and the user profile score.

11. The system of Claim 10, further comprising:
receiving feedback data from the destination source; and
updating the user profile with the feedback data based on the global user identifier.

12. The system of Claim 11, wherein the updating the user profile with the feedback data includes merging the feedback data to the user profile, based on the global user identifier.

13. The system of any of Claims 10 to 12, further comprising:
receiving, based on a second event, second user data;
determining a data attribute of the second user data exists in the user profile; and
merging the second user data with the existing user profile.

14. A method, comprising:
receiving, based on an event, user data at a user data platform from a user data source;
creating a global user identifier for the user data;
creating a user profile that includes the user data and the global user identifier;
transmitting a call to one or more application programming interfaces for enrichment data from one or more enhancement data sources;
receiving engagement data from the one or more enhancement data sources;
updating the user profile with the engagement data and the enrichment data from external sources via application programming interfaces;
scoring the user profile based on a first set of rules;
routing the user profile to a destination source based on application of a second set of rules and the user profile score;
receiving feedback data from the destination source; and
updating the user profile with the feedback data based on the global user identifier.

15. The method of Claim 14, wherein the method further comprises removing duplicate user data from the user profile.
